# EUROPEAN PATENT SPECIFICATION

(11) **EP 2 783 490 B1**
(45) Date of publication and mention of the grant of the patent: **14.09.2016**
(21) Application number: 12801623.5
(22) Date of filing: 20.11.2012
(51) Int. Cl.: H04L 12/70

(54) **TIME-SENSITIVE DATA DELIVERY**
ZEITKRITISCHE DATENLIEFERUNG
LIVRAISON DE DONNÉES SENSIBLES AU TEMPS

(30) Priority: 21.11.2011 GB 201120039
(43) Date of publication of application: 01.10.2014
(73) Proprietor: Push Technology Limited, Maidenhead, Berkshire SL6 1PT (GB)
(72) Inventor: HUDSON, Darren, Maidenhead Berkshire SL6 1PT (GB)
(74) Representative: Boult Wade Tennant
(86) International application number: PCT/GB2012/052871
(87) International publication number: WO 2013/076473

(56) References cited:
- EP-A1- 1 906 348
- EP-A2- 1 696 376
- WO-A1-2008/113649
- GB-A- 2 348 025
- US-A1- 2005 021 622
- US-A1- 2005 155 035
- US-B1- 6 633 564

## Description

### Background

Increasingly, the data that is transmitted over networks such as the Internet is of a time-sensitive nature. For example, the data may be continually changing or updating, as is the case with data relating to stock prices, currencies or the location of items in online games. Providers of this data therefore want the data to be provided to recipients as rapidly as possible, as the data quickly becomes out of date.

Often, the time-sensitive data is distributed to a large number of recipients. This further increases the demands on the system delivering the data, as the system must be sufficiently scalable to enable provision to a large number of recipients, whilst respecting the time-sensitive nature of the data.

In a publish/subscribe system (known as a pub/sub system), a message broker manages the transmission of data. The message broker may be implemented on a server connected to the network. A subscriber indicates to the message broker which type or topic of data they are interested in. The publisher provides the data to the message broker, and the message broker provides the data to the interested subscribers. The message broker must therefore be scalable enough to handle the number of subscribers, whilst being fast enough to rapidly provision the time-sensitive data. This can result in significant hardware, memory and bandwidth requirements on the server implementing the message broker.

US 2005/0155035 A1 discloses information kit objects for publish/subscribe integration architecture. US 6,633,564 B1 discloses inserting packets into a data stream.

US 2005/021622 A1 discloses dynamic subscription and message routing on a topic between publishing nodes and subscribing nodes. WO 2008/113649 A1 discloses filter sequencing based on a publish-subscribe architecture for digital signal processing. GB 2,348,025 A discloses a message broker providing a publish/subscribe service.

The embodiments described below are not limited to implementations which solve any or all of the disadvantages of known publish/subscribe systems.

### Summary

The present invention in its various aspects is as set out in the appended claims. This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Time-sensitive data delivery is described. In one example, time-sensitive data is transmitted from a server to a plurality of client terminals using a separate queue for each of the client terminals and at least one queue serving engine to serve the queues. Requests are received from the client terminals to subscribe to a topic, and, when a data message relating to the topic is received, the message is stored and a reference to the message added to the client terminal queues. Each queue is independently served by its associated queue serving engine. The queue serving engine determines when to transmit the message to the queue's associated client terminal in dependence on the queue contents. For example, each queue comprises a low-priority and a higher-priority sub-queue. Low-priority messages are only transmitted when no higher-priority messages are pending, and lower-priority messages are divided into fragments such that their transmission does not impede incoming higher-priority messages.

According to one aspect, there is provided a method of transmitting time-sensitive data from a server to a plurality of client terminals as defined in claim 1.

According to another aspect, there is provided a computing device as defined in claim 9.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 illustrates a schematic diagram of a publish/subscribe system;
Figure 2 illustrates a schematic diagram of a server implementing a message broker using priority queues and dynamic thread allocation;
Figure 3 illustrates a flowchart of a process for transmitting low-priority messages which avoids impeding higher-priority messages;
Figure 4 illustrates a flowchart of a process for transmitting messages using a dynamic allocation of threads from a thread pool; and
Figure 5 illustrates a schematic diagram of a computing device for implementing the server of Figure 2.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

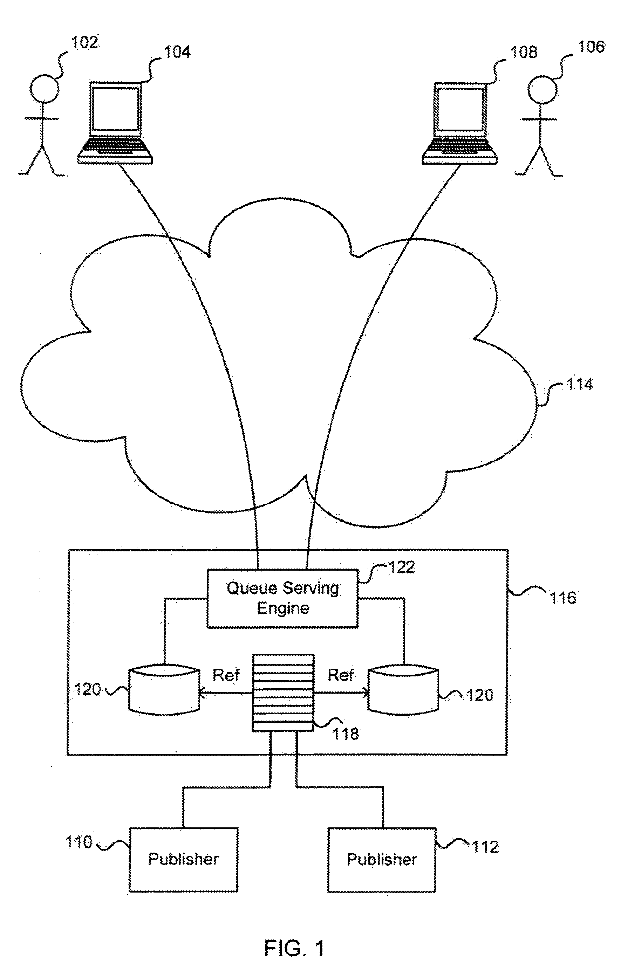

Reference is first made to FIG. 1, which illustrates a schematic diagram of a pub/sub system in which enhancements outlined below can be implemented to increase the speed at which time-sensitive data can be provided to subscribers, and which improves the scalability when large numbers of subscribers are being served.

The pub/sub system of FIG.1 comprises a first subscriber 102 operating a first client terminal 104, and a second subscriber 106 operating a second client terminal 108. In other examples, many more subscribers can also be present, each operating a client terminal. The client terminals 104, 108 can be of any suitable form for receiving and presenting data to the subscribers. For example, these can be desktop, notebook or tablet computers, mobile telephones, or any other suitable electronic device able to receive transmitted data. In other examples, the client can also be in the form of a software application running on a suitable computing device.

The pub/sub system also comprises a first publisher 110 and a second publisher 112. In other examples, different numbers of publishers (or only a single publisher) can be present in the system. The publishers 110, 112 are publishing content of any type that is suitable for distribution over a pub/sub system. This includes, for example, stock prices, currency exchange prices, betting data or other financial information, news/sports items, multi-media data, and gaming data for online games. Some of the content provided by the publishers is regularly or continuously updated, and hence is of a time-sensitive nature. This means that the content can become outdated if it is not provided to the subscribers rapidly enough.

The subscribers 102, 106 can subscribe to one or more topics in the pub/sub system. This means that the subscribers have requested to receive content of a certain type or relating to a certain subject. For example, the subscribers can request to receive specific currency exchange prices or news items. In some examples, the subscribers 102, 106 can subscribe to the same topic or different topics.

The client terminals 104, 108 receive the subscribed content in the form of data messages sent over a communications network 114. In one example, the communications network 114 may be the Internet. However, in other examples, the communications network 114 can be a different network, such as a LAN or private network, or comprise one or more additional networks, such as a mobile communication (cellular) network.

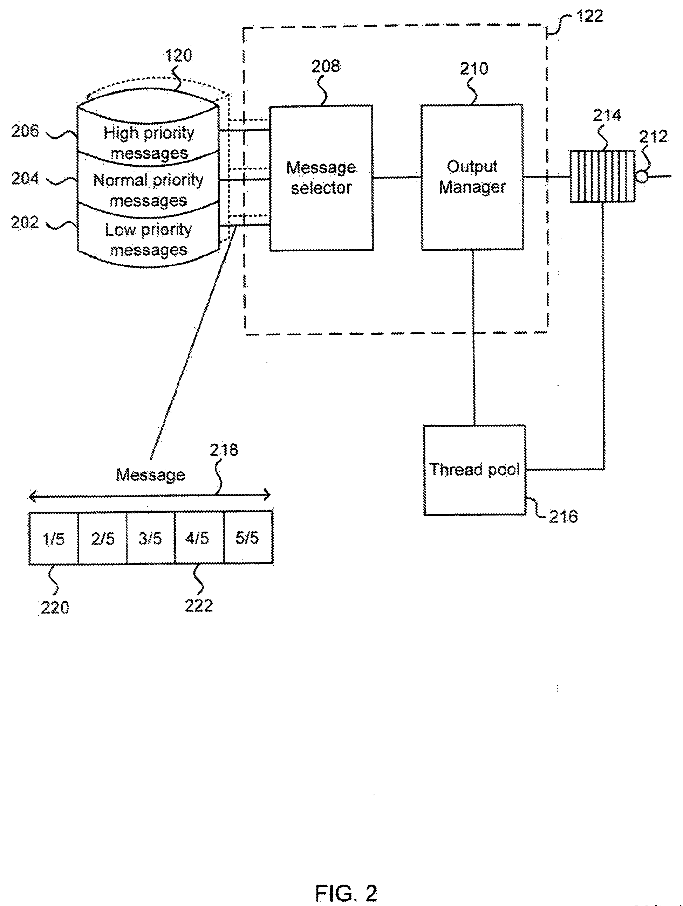

A server 116 is connected to the communication network 114 and configured to act as a message broker to manage and control the delivery of the publisher's content to the appropriate subscribers in as rapid a manner as possible. More detail on the operation of the server 116 is outlined below with reference to FIG. 2 to 4.

The server 116 comprises a storage device 118, which can be in the form of, for example, solid-state (volatile or non-volatile) memory and/or one or more hard-disk drives. The content from the publishers is received in the form of data messages and the messages are stored at the storage device 118. As described in more detail below, the server 116 constructs a separate virtual queue 120 for each client terminal 104, 108 that has requested to subscribe to at least one topic. The queues 120 are used to queue relevant data messages for transmission to the client terminals. In other words, if a data message is received from a publisher relating to a topic to which a subscriber using a given client terminal has subscribed, then that data message is added to the virtual queue for that client terminal. However, the queues 120 are virtual in the sense that they do not contain the actual data messages themselves, but only a reference to where the data messages are stored on the storage device 118. In other words, the messages are not copied from the storage device to the queues, but only referenced from the storage device. This saves a significant amount of storage space, particularly when there are a large number of client terminals receiving data.

Each of the separate virtual queues are served by a queue serving engine 122. In some examples, one queue serving engine 122 serves multiple virtual queues, although the number of queues served per queue serving engine can be varied as appropriate. Therefore, some examples can comprise a single queue serving engine 122 serving all the virtual queues, whereas other examples can utilise more than one queue serving engine 122 to serve the virtual queues. More detail on the queue serving engines 122 is described below.

Reference is now made to FIG. 2, which illustrates a schematic diagram of a portion of the server 116 implementing the message broker in more detail. FIG. 2 shows in more detail one of the virtual queues 120 and its associated queue serving engine 122.

As noted, the data messages for a client terminal are placed on the client terminal's queue 120 in the form of a reference from the storage device 118. The virtual queue is divided into at least two sub-queues, where each sub-queue is associated with a different message priority. For example, FIG. 2 illustrates queue 120 being divided into three sub-queues: a low-priority sub-queue 202, a normal-priority sub-queue 204 and a high-priority sub-queue 206. In other examples, a different number of sub-queues can be used. For example, only two sub-queues (one low-priority and one high-priority) can be used, or more than three can be used if a distinction between more priority levels is desired.

Each message being placed on the queue 120 is allocated a priority value corresponding to one of the sub-queue priority levels, and placed on the corresponding sub-queue accordingly. The allocation of the priority level to a data message depends on the type of message and/or its content. For example, data messages relating to the low-level operation of the system, such as acknowledgement (ack) messages can be considered high priority and added to the high-priority sub-queue 206. Data messages relating to stock prices, currencies, betting or other rapidly changing time-sensitive data can be considered to be normal priority and added to the normal-priority sub-queue 204. Data messages containing news/sports items can be considered low priority (due to them having less of a time-sensitive nature than stock prices etc.), and can be added to the low-priority sub-queue 202.

FIG. 2 shows the queue serving engine 122 comprising a message selector 208 and an output manager 210. The message selector 208 controls the selection of messages from the queues for transmission over the network to the client terminal. In other words, the message selector is responsible for deciding which message is taken off the queue next and sent. The general operation of the message selector 208 can be summarised as: only transmit a message from a sub-queue if the client is able to receive a message and no messages are currently pending in a higher priority sub-queue.

In other words, the message selector will only transmit a low-priority message if there are no messages pending in a higher-priority sub-queue (e.g. the normal-priority and high-priority sub-queues of FIG. 2). Similarly, the message selector will only transmit a normal-priority message if there are no messages pending in the high-priority sub-queue, but the presence of a pending low-priority message does not affect the transmission. For a high-priority message, pending messages in the normal-priority and low-priority sub-queues do not impact the transmission, and the high-priority message is transmitted as soon as communication resource is available.

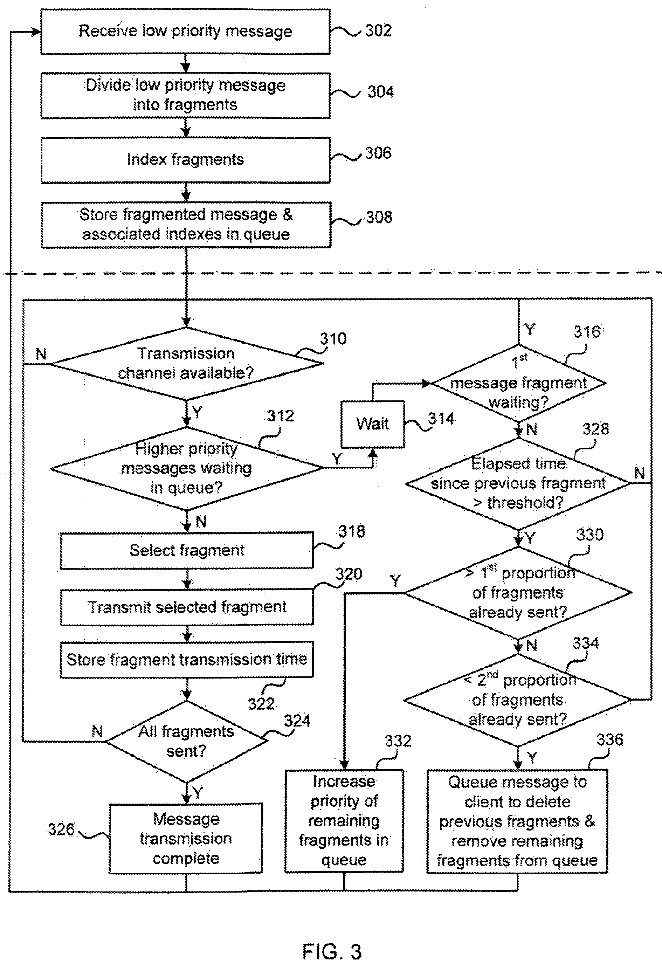

However, a message can only be sent when other messages are not currently being transmitted. For example, if no messages are pending in the queue except for a low-priority message, then this low-priority message is sent. However, for the duration that this low-priority message is being transmitted, the server is blocked from sending any other messages to the client terminal. Therefore, if a normal-priority message arrives shortly after the start of the transmission of the low-priority message, then the normal-priority message must wait for the low-priority message to complete transmission before it can be sent. If the low-priority message is a long message, then this can block newly arriving higher priority messages for a significant time period. As the higher-priority messages are time-sensitive, this can result in the message becoming out-dated. Enhancements for countering this issue are discussed below with reference to FIG. 3.

Once the message selector 208 has selected a message, then the output manager 210 handles the transmission from the server 116 over the network 114 to the client terminal. The message is sent from the server 116 to the network 114 via a socket 212 (such as a TCP socket) or other endpoint associated with the queue serving process. Some pub/sub systems use an execution thread allocated to each socket to manage the transmission of the data message over the network using the desired transmission protocol (such as TCP). However, in the case that a very large number of client terminals are subscribing to the system, this results in a large number of threads being required. The number of threads needed to support all the sockets can limit the number of client terminals that can be served by the pub/sub system.

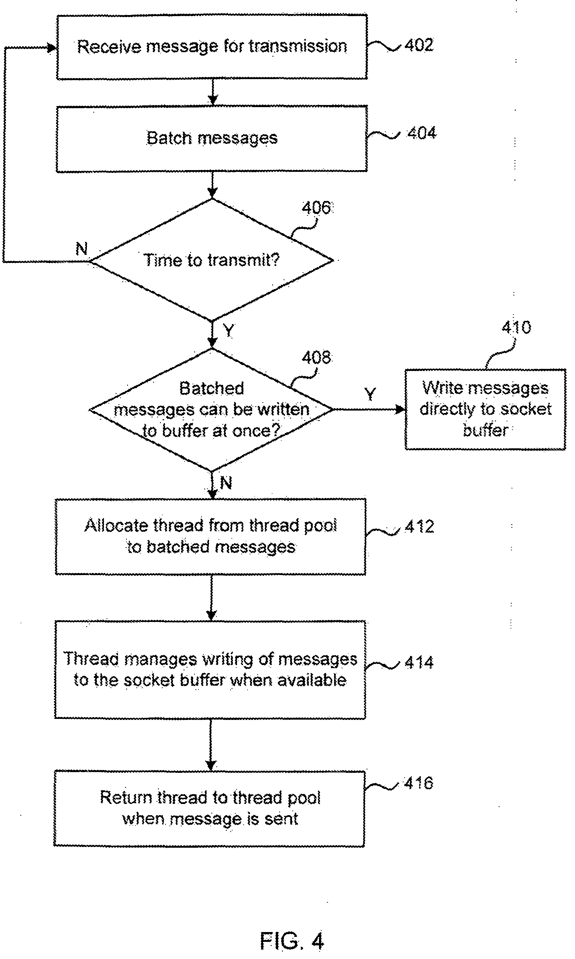

To avoid the use of a large number of threads, the output manager 210 controls the transmission of data messages by considering low-level information on how the data is transmitted from the server. Each socket 212 has an associated socket buffer 214 which stores data for transmission via the socket 212. The size of the socket buffer 214 (i.e. how much data it can store) can be defined by the transmission protocol flow control mechanism. For example, the socket buffer 214 size can be set by the TCP sliding window. The output manager 210 reads the size of the socket buffer 214, and determines whether or not to write the data message directly to the socket buffer 214 or pass the data to a dynamically allocated thread provided by a thread pool 216. More details on this operation are described below with reference to FIG. 4.

Reference is now made to FIG. 3, which illustrates a flowchart of a process for transmitting low-priority messages which avoids impeding higher-priority messages. As noted above, whilst the message selector 208 only transmits a message from a sub-queue when there are no pending messages in a higher-priority sub-queue, this does not prevent the transmission of a low-priority message blocking a higher-priority message arriving after the start of the transmission. The process of FIG. 3 illustrates how the message selector 208 can handle low-priority messages differently, in order to alleviate this. The portion of the flowchart below the dashed line indicates operations performed by the message selector 208.

A low-priority message, such as a news or sports item for example, is received 302 from the publisher. Before being stored on the storage device 116 at the server 118, the low-priority message is divided 304 into a plurality of fragments. In other words, the low-priority message is split up into smaller, separate messages. In examples, the low-priority message can be divided up such that no fragments are larger than a predefined size (e.g. such that no one fragment is larger than, say, 100 bytes). In other words, the message is divided up into enough fragments to ensure that none of the fragments is above the predefined size.

Once the message has been divided into fragments, the fragments are indexed 306 such that the position of each fragment within the overall message can be identified. This is illustrated in the example of FIG. 2, where a low-priority message 218 is shown divided into five fragments, each of which is indexed. For example, fragment 220 is indexed to show it is the first of the five fragments, and fragment 222 is indexed to show that it is the fourth of the five fragments.

The fragments and their associated indexes are then stored 308 at the storage device 118, and references are added to the appropriate virtual queues of client terminals subscribing to the low-priority message that was divided up.

Note that, in alternative examples, rather than fragmenting the messages at the storage device 118, the message can be kept whole at the storage device, but instead the references in the virtual queues can encode the fragmentation. For example, the references in each queue can specify the number and location of the bytes of the message that they refer to. This allows for different degrees or parameters of fragmentation per queue, and hence per client.

A queue serving engine 122 then serves a queue 120 having references to these fragments, as illustrated by the operations performed below the dashed line in FIG. 3. This determines 310 whether a transmission channel is available. For example, this can check whether the associated client terminal is idle (i.e. able to receive data) and another message is not in the process of being transmitted. If a channel is not available, then the queue serving engine waits until it becomes available before proceeding further. If the channel is available, then the message selector 208 determines 312 whether there are higher priority messages waiting in the queue 120. As this is a low-priority message, then the message selector 208 does not proceed further unless no other higher-priority messages are pending, as outlined above.

If it is determined 312 that there are higher-priority messages pending, then the message selector waits 314 to allow for the higher-priority messages to send. It is determined 316 whether the fragment of the low-priority message waiting to be sent is the first fragment of the low-priority message to be sent. If so, then the process repeats, and the queue serving engine waits until the transmission channel is available and there are no pending higher-priority messages. The case in which this is not the first fragment waiting is discussed in more detail below.

Note that this check for higher-priority messages is performed per-fragment of the low-priority message. As the fragments are smaller than the overall low-priority message, this means that checks for higher-priority messages in the queue are performed more often whilst the low-priority message is being sent. Therefore, the transmission of a low-priority message can only obstruct the transmission of a newly arriving higher-priority message for a maximum of one fragment transmission duration, rather than for the transmission duration of the whole low-priority message.

Once the transmission channel is available, and there are no pending higher-priority messages, then a fragment of the low-priority message is selected for transmission. In one example, the fragments of the low-priority message are sent in order, such that the first fragment (e.g. fragment 220 from FIG. 2) is sent first, followed by the second, then the third etc. However, in alternative examples, the fragments may not be sent in this sequence. Once the fragment has been selected, it is transmitted 320 to the appropriate client terminal. The time at which the fragment was transmitted is then stored 322 (the reason for this is described below). It is then determined 324 whether all fragments of the low-priority message have been sent (or alternatively all fragments that the client terminal has requested in the case of pagination). If so, then the transmission of the low-priority message is complete 326, and the process waits until another low-priority message is pending in the queue and then repeats. If there are more fragments to transmit, then the process repeats from the determination 310 of whether there is an available transmission channel.

The above-described steps cover the case where the fragment being sent is the first fragment. However, once one or more fragments of the low-priority message have been transmitted, then issues can arise if the remaining fragments of the low-priority message cannot be sent due to higher-priority messages taking precedence and preventing transmission. This scenario is handled by the remainder of FIG. 3, starting from the determination step 316.

If it is determined 316 that the fragment is not the first fragment waiting to be sent (i.e. other fragments of this low-priority message have previously been sent), then the elapsed time since the previous fragment was sent is calculated, and it is determined 328 whether this is greater than a threshold. The elapsed time is calculated from the current time and the time stored 322 for the transmission of the previous fragment.

If the elapsed time is not greater than the threshold, the process performed by the queue serving engine 122 repeats (i.e. it goes back to waiting for an available transmission channel). In other words, if the time between transmission of fragments has not got too large, then the process continues as above. However, if the elapsed time is greater than the threshold, then this indicates that the time between transmission of fragments has become excessive. If this is the case, then it is determined 330 whether greater than a first proportion of fragments of this low-priority message have previously been sent. If so, then the remaining fragments for this low-priority message are moved 332 to a higher-priority sub-queue, such that they will be transmitted more quickly to the client terminal. This can be performed to ensure that messages having only a small number of fragments remaining but which have been waiting to send for a relatively long time, will be competed more rapidly. The process then waits for the arrival of another low-priority message in the queue, and repeats.

For example, in the example of FIG. 2, the low-priority message had five fragments. If 80% of the fragments of the message have been sent (i.e. the first four out of the five fragments), then the overall message is nearly complete. However, if the final fragment cannot be sent due to other higher-priority message taking precedence and is waiting for longer than the threshold time, then the message may stay in an incomplete form for some time. To avoid this, the remaining fragment is promoted to a higher-priority sub-queue and will be sent more rapidly.

Note that the first proportion can be any suitable value (not just 80%). In other examples, instead of using a proportion, and absolute number of remaining fragments can be used (e.g. less than or equal to two fragments remaining).

If it was determined 330 that greater than the first proportion of the fragments had not been sent, then it is determined 334 whether less than a second proportion of the fragments have previously been transmitted. For example, the second proportion can be selected such that it is checked whether only a small proportion of the fragments have been sent. This therefore provides a check for cases in which a small proportion of the fragments have been sent, but the remaining fragments have been delayed in the queue for some time (greater than the elapsed time threshold).

If less than the second proportion of the fragments have previously been transmitted, then a message is queued 336 for the client terminal to delete the previous fragments for this message, and the remaining fragments are removed from the queue. In other words, further transmission of this low-priority message is abandoned, as only a small amount of the message has been sent and the rest is delayed by too great an amount. The process then waits for the arrival of another low-priority message in the queue, and repeats. Note that the message for the client terminal to delete the previous fragment may be a higher-priority message than the low-priority message that is being deleted. Also note that, in some examples, transmission of the abandoned low-priority message may be retried (i.e. requeued) at a later time, or it may be permanently abandoned.

For example, considering the low-priority message of FIG.2 with five fragments, if the second proportion is 20% and only one fragment has been sent and the remaining fragments are stuck in the queue, then it may be better to abandon transmission of this low-priority message at the present time.

Conversely, if less than the second proportion of the fragments have not previously been transmitted, then the process performed by the queue serving engine 122 repeats (i.e. it goes back to waiting for an available transmission channel). In other words, if the proportion of fragments previously transmitted is neither too low (less than the second proportion) nor too high (greater than the first proportion), then the queue serving engine continues to try and transmit the remaining fragments of the low-priority message.

The above-described process of FIG. 3 provides a technique for managing the transmission of low-priority messages such that they do not impede the transmission of higher-priority messages. By dividing up the low-priority message into fragments, and checking for pending higher-priority messages between transmission of each fragment, a newly arriving higher-priority message will not wait as long in the queue for a free transmission channel. Therefore, the higher-priority messages, which are more time-sensitive, are provided more rapidly to the subscribers. The additional checks outlined above also provide for management of partially transmitted low-priority messages, in the case where some fragments have been sent, but the remainder are delayed. This enables the remainder to either be abandoned, or forced through to the subscriber by promoting them to a higher-priority sub-queue.

It should be noted that the fragmentation of messages in the above-described manner is optional, and the system can still provide high-speed message delivery without fragmentation, if desired. It should also be noted that, in further examples, fragmentation of data to avoid impeding higher-priority messages does not need to only be performed for low-priority messages. Instead, fragmentation can be performed for any priority of message for which higher-priority queue levels exist. For example, with reference to FIG. 2, normal priority-messages 204 can also (or alternatively) be fragmented to avoid them impeding the high-priority messages 206.

Reference is now made to FIG. 4, which illustrates a flowchart of a process for transmitting messages using the dynamic allocation of threads from the thread pool 216. The process of FIG. 4 is performed by the output manager 210 of the queue serving engine 122. This process is performed when transmitting a message, i.e. following selection of a message from the queue as described above.

A message is received 402 for transmission. This message may be a message of any priority level (i.e. from any sub-queue) or may be a fragment as described above. Messages are "batched" or grouped together, such that they are of a size that fills the socket buffer. The received message is batched 404 with other messages waiting to be transmitted, and it is determined 406 whether the elapsed time is such that transmission should begin. If not, then the process continues receiving further messages adding them to the batch. Conversely, if so, then it is determined 408 whether the socket buffer is available such that the batched messages can be written immediately to the socket buffer. If this is the case, then the message is written 410 directly to the socket buffer 214. This means that the handling of the message transmission is fully passed to the communication protocol (e.g. TCP), which will transmit the message as soon as the network conditions permit. No threads are needed to manage this message transmission, and hence this can be referred to as non-blocking.

If the batched messages cannot be written at once to the socket buffer 214, then an execution thread is dynamically allocated 412 to the message from the thread pool 216. The allocated thread then manages 414 writing of the batched messages to the socket buffer 214, when it becomes available. When a thread is needed to manage writing of the socket buffer, then no further messages are able to be sent until transmission of those messages have been completed. Hence, this is referred to as blocking transmission. Once the messages have been sent, the allocated thread is returned 416 to the thread pool 216 for reallocation.

The process described above with reference to FIG. 4 therefore uses knowledge of the current situation of the low-level communication protocol socket buffer to manage the allocation of resources when handling transmission of messages. As a result of this, threads are only allocated when they are needed, and avoided when the message can be directly written to the socket buffer. Because the processing and memory resources of the server can only permit a certain number of simultaneous threads to be active, this can limit the number of client terminals that can subscribe to messages. However, the above process enables the server to communicate with a larger number of client terminals, by avoiding thread use whenever possible, and by statistically multiplexing the threads through dynamic allocation.

In addition to using the above-described techniques to manage the use of resources when outputting messages from the server, similar techniques can also be used to manage the use of resources for inbound messages. For example, an input thread pool can be used in conjunction with inbound message sockets, such that input threads are only utilised when needed. This can be beneficial in scenarios in which a large number of messages are being received. This can occur, for example, when the server 116 receives input from another server of the pub/sub system (rather than directly from a publisher). In such scenarios, the inbound messages can arrive very quickly (due to the speed of processing by the other server connected to the input). These rapidly arriving inbound messages need to be input quickly, so that they can be processed and sent out without the server being swamped. A dynamic thread pool technique, such as that described above, enables the processing and memory resources to be shared amongst the input message streams, enabling high volumes of traffic to be served at a particular input when needed.

In the case where fragmentation of messages is being performed, then the batching of messages as described above with reference to FIG. 4 can result in fragments being batched up together, thereby reducing some of the benefits of fragmentation. To avoid this, a time-delay can optionally be placed on the passing of the fragments to the output manager 210. This means that the fragments do not arrive in quick succession at the output manager, and hence other messages can be batched between the fragments. In other examples, the batching process can be configured to be aware of the presence of fragments, such that when a fragment is detected no further messages are batched, and the messages are immediately sent to the socket buffer or allocated a thread as appropriate.

The performance of the system when delivering large low-priority items can also be further improved by managing the way in which fragments are placed on the virtual queues. For example if a large news item is produced by a publisher, then this may be fragmented in a number of "chunks" or fragments. Due to the high-speed nature of the virtual queues and queue serving engines, all of these fragments will be quickly placed on the queue, and the queue serving engine is alerted that it needs to service the client terminals that it is managing. Typically, this will happen in nano-seconds. The queue serving engine then selects the client, which has all these fragments in the low-priority sub-queue, and populates the socket buffer and sends as much information that will fit into the buffer at that time, as described above. Because writing the fragments out of the buffer takes longer that queuing the fragments, this results in a socket buffer full of low priority messages. To avoid this, the fragments can optionally be placed on the queue with a predefined time period between them. For example, the fragments can be put on the queue every 100ms. As a result of this, the socket buffer does not become flooded with low priority information.

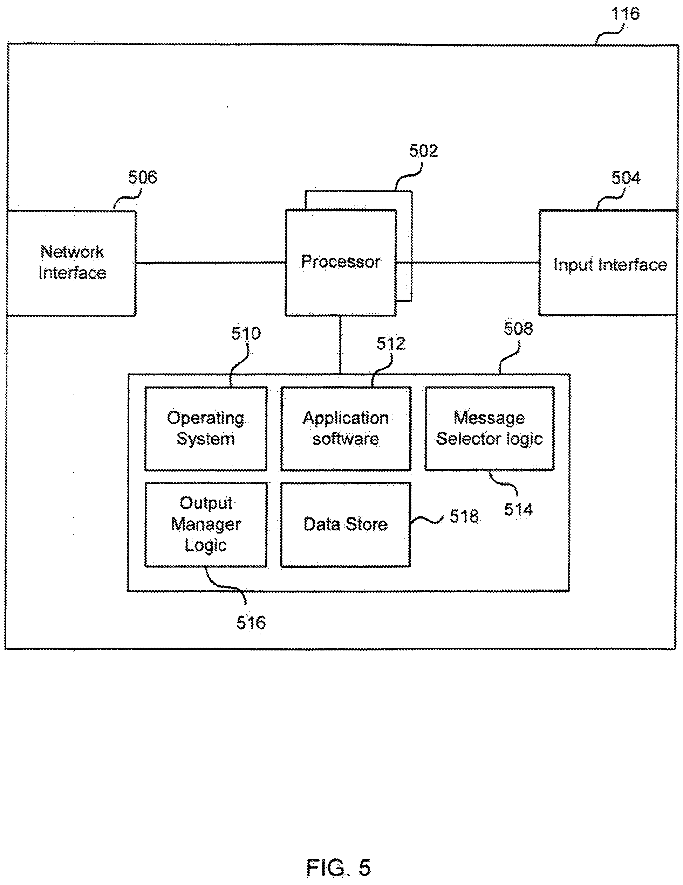

Reference is now made to FIG. 5, which illustrates various components of an exemplary computing-based device which may implement the server 116 above. The computing-based device may be implemented as any form of a computing and/or electronic device in which embodiments of the pub/sub system may be implemented.

The computing-based device comprises one or more processors 502 which may be microprocessors, controllers or any other suitable type of processors for processing computer executable instructions to control the operation of the device in order to manage and control transmission of messages in a pub/sub system. In some examples, for example where a system on a chip architecture is used, the processors 502 may include one or more fixed function blocks (also referred to as accelerators) which implement a part of the queue serving and transmission methods in hardware (rather than software or firmware).

The computing-based device also comprises an input interface 504, arranged to receive messages relating to a topic from the publishers, and at least one network interface 506 arranged to send and receive data messages over the communication network 114. In some examples, the input interface 504 and network interface 506 can be integrated.

The computer executable instructions may be provided using any computer-readable media that is accessible by the computing based device. Computer-readable media may include, for example, computer storage media such as memory 508 and communications media. Computer storage media, such as memory 508, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 508) is shown within the computing-based device it will be appreciated that the storage may be distributed or located remotely and accessed via a network or other communication link (e.g. using network interface 506).

Platform software comprising an operating system 510 or any other suitable platform software may be provided at the computing-based device to enable application software 512 to be executed on the device. Additional software provided at the device may include message selector logic 514 for implementing the functionality of the message selector 208 described above, and output manager logic for implementing the functionality of the output manager 210 described above. The memory 508 can also provide a data store 518, which can be used to provide storage for data used by the processors 502 when performing the queue serving and transmission operations. This can include storing of the messages from the publishers and storing of the virtual queues.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A method of transmitting time-sensitive data from a server (116) to a plurality of client terminals (104, 108), comprising:
constructing a separate virtual queue (120) for the each of the client terminals (104,108) at the server (116), wherein the virtual queue (120) for each of the client terminals (104, 108) comprises a low-priority sub-queue associated with data of low time-sensitivity, and a normal-priority sub-queue associated with data of a higher time-sensitivity;
instantiating at least one queue serving engine (122) for serving the separate virtual queues (120);
receiving requests from the plurality of client terminals (104, 108) to subscribe to a topic;
receiving a data message relating to the topic;
determining that the received data message is a low time-sensitivity message;
storing the data message on a storage device (118) at the server (120) by dividing (304) the data message into fragments and storing each fragment;
adding separate references to each fragment of the data message to the low-priority sub-queues for those client terminals (104, 108) subscribed to the topic, wherein the references are to where the associated fragments are stored on the storage device (118); and
independently serving each virtual queue (120) with the at least one queue serving engine (122), wherein each queue serving engine (122) determines in dependence on the virtual queue contents when to transmit the data message to the virtual queue's associated client terminal (104, 108), thereby transmitting (320) one of the fragments from the low-priority sub-queue if no data messages are waiting in the normal-priority sub-queue;
wherein, responsive to determining that one of the fragments cannot be transmitted due to data messages waiting in the normal-priority sub-queue, and that at least one previous fragment from the data message has previously been transmitted, and that the elapsed time since the at least one previous fragment was transmitted is greater than a predefined value, and that greater than a first proportion of the fragments from the data message have previously been transmitted, the step of independently serving each virtual queue (120) further comprises moving (322) the remaining fragments to the normal-priority sub-queue; and
wherein, responsive to determining that one of the fragments cannot be transmitted due to data messages waiting in the normal-priority sub-queue, and that at least one previous fragment from the data message has previously been transmitted, and that the elapsed time since the at least one previous fragment was transmitted is greater than a predefined value, and that greater than the first proportion of the fragments from the data message have not previously been transmitted, and that less than a second proportion of the fragments from the data message have previously been transmitted, the step of independently serving each virtual queue (120) further comprises removing (336) the remaining fragments from the queue and adding a message to the associated client terminal to delete the previously transmitted fragments.

2. The method according to claim 1, wherein the queue (120) for each of the client terminals (104, 108) further comprises a high-priority sub-queue associated with data of a yet higher time-sensitivity.

3. The method according to claim 1 or claim 2, wherein the step of determining that the received data message is a low time-sensitivity message comprises at least one of:
determining that the received data message is greater than a predetermined size; and
determining that the received data message comprises a low-priority flag.

4. The method according to claim1, wherein the step of transmitting one of the fragments comprises selecting which one of the fragments to transmit in dependence on a portion of the data message content requested by the associated client terminal.

5. The method according to claim 1, wherein the step of independently serving each queue (120) further comprises:
batching (404) the data message with other pending data for transmission to form a batched message of sufficient size to fill a network socket buffer associated with the queue serving engine; and
determining whether the socket buffer is available to receive the batched message.

6. The method according to claim 5, wherein, if the socket buffer is available to receive the batched message, writing (410) the batched message to the socket buffer.

7. The method according to claim 5 or 6, wherein, if the socket buffer is not available to receive the batched message, allocating (412) a thread from a thread pool to the batched message and allowing (414) the thread to manage writing of the batched message to the socket buffer.

8. A computer program product comprising computer program code means adapted to perform all the steps of any of claims 1 to 7 when said program is run on a computer.

9. A computing device (116), comprising:
a network interface (506) arranged to connect to a network and configured to receive requests from a plurality of client terminals (104, 108) to subscribe to a topic, and to transmit topic data from the computing device (116) to the plurality of client terminals (104, 108) subscribed to the topic;
a storage device (508) arranged to store a separate virtual queue (120) for the each of the client terminals (104, 108), wherein the virtual queue (120) for each of the client terminals (104, 108) comprises a low-priority sub-queue associated with data of low time-sensitivity, and a normal-priority sub-queue associated with data of a higher time-sensitivity;
an input interface (504) arranged to receive a data message relating to the topic, to determine that the received data message is a low time-sensitivity message, and to store the data message on the storage device (508) by dividing (304) the data message into fragments and storing each fragment;
a processor (502) configured to instantiate at least one queue serving engine (122) for serving the separate virtual queues, to add references to each fragment of the data message to the low-priority sub-queues for those client terminals (104, 108) subscribed to the topic, wherein the references are to where the associated fragments are stored on the storage device (508), and to independently serve each virtual queue (120) with the at least one queue serving engine (122), wherein each queue serving engine (122) determines in dependence on the virtual queue contents when to transmit the data message to its associated client terminal (104, 108), thereby transmitting (320) one of the fragments from the low-priority sub-queue if no data messages are waiting in the normal-priority sub-queue;
wherein, responsive to determining that one of the fragments cannot be transmitted due to data messages waiting in the normal-priority sub-queue, and that at least one previous fragment from the data message has previously been transmitted, and that the elapsed time since the at least one previous fragment was transmitted is greater than a predefined value, and that greater than a first proportion of the fragments from the data message have previously been transmitted, the processor is further configured to move (322) the remaining fragments to the normal-priority sub-queue; and
wherein, responsive to determining that one of the fragments cannot be transmitted due to data messages waiting in the normal-priority sub-queue, and that at least one previous fragment from the data message has previously been transmitted, and that the elapsed time since the at least one previous fragment was transmitted is greater than a predefined value, and that greater than the first proportion of the fragments from the data message have not previously been transmitted, and that less than a second proportion of the fragments from the data message have previously been transmitted, the processor is further configured to remove (336) the remaining fragments from the queue and add a message to the associated client terminal to delete the previously transmitted fragments.

## Patentansprüche

1. Verfahren zum Übertragen zeitkritischer Daten von einem Server (116) zu mehreren Clientstationen (104, 108), wobei das Verfahren aufweist:
Aufbauen einer separaten virtuellen Warteschlange (120) für jedes der Clientgeräte (104, 108) am Server (116), wobei die virtuelle Warteschlange (120) für jede der Clientstationen (104, 108) eine Teilwarteschlange (120) niedriger Priorität, die mit in geringem Maße zeitkritischen Daten verknüpft ist, und eine Teilwarteschlange normaler Priorität aufweist, die mit in höherem Maße zeitkritischen Daten verknüpft ist,
Instanziieren von zumindest einer Warteschlangenbetreuungsengine (122) zum Betreuen der separaten virtuellen Warteschlangen (120),
Empfangen von Anfragen zum Abonnieren eines Themas von den mehreren Clientstationen (104, 108),
Empfangen einer das Thema betreffenden Datennachricht, Bestimmen, dass es sich bei der empfangenen Datennachricht um eine in geringem Maße zeitkritische Nachricht handelt,
Speichern der Datennachricht in einer Speichervorrichtung (118) am Server (120), wobei die Datennachricht in Fragmente geteilt (304) und jedes Fragment gespeichert wird,
Hinzufügen separater Verweise auf jedes Fragment der Datennachricht zu den Teilwarteschlangen niedriger Priorität für die Clientstationen (104, 108), die das Thema abonniert hatten, wobei die Verweise sich darauf beziehen, wo die zugehörigen Fragmente in der Speichervorrichtung (118) gespeichert sind, und
individuelles Betreuen einer jeden virtuellen Warteschlange (120) mit der zumindest einen Warteschlangenbetreuungsengine (122),
wobei jede Warteschlangenbetreuungsengine (122) abhängig von den virtuellen Warteschlangeninhalten bestimmt, wann die Datennachricht an die der virtuellen Warteschlange zugeordneten Clientstation (104, 108) übertragen werden soll, wobei hierbei, wenn in der Teilwarteschlange normaler Priorität keine Datennachrichten warten, eines der Fragmente der Teilwarteschlange niedriger Priorität übertragen (320) wird,
wobei in Reaktion auf eine Bestimmung, dass eines der Fragmente aufgrund von in der Teilwarteschlange normaler Priorität wartenden Datennachrichten nicht übertragen werden kann und zumindest ein vorhergehendes Fragment der Datennachricht zuvor übertragen wurde und die Zeit, die seit der Übertragung des zumindest einen vorhergehenden Fragments vergangen ist, einen vorgegebenen Wert überschreitet und mehr als ein erster Teil der Fragmente der Datennachricht zuvor übertragen wurde, der Schritt zum individuellen Betreuen einer jeden Warteschlange (120) ferner ein Verschieben (322) der verbliebenen Fragmente in die Teilwarteschlange normaler Priorität umfasst, und
wobei in Reaktion auf eine Bestimmung, dass eines der Fragmente aufgrund von in der Teilwarteschlange normaler Priorität wartenden Datennachrichten nicht übertragen werden kann und zumindest ein vorhergehendes Fragment der Datennachricht zuvor übertragen wurde und die Zeit, die seit der Übertragung des zumindest einen vorhergehenden Fragments vergangen ist, einen vorgegebenen Wert überschreitet und mehr als der erste Teil der Fragmente der Datennachricht zuvor nicht übertragen wurde und weniger als ein zweiter Teil der Fragmente der Datennachricht zuvor übertragen wurde, der Schritt zum individuellen Betreuen einer jeden Warteschlange (120) ferner ein Entfernen (336) der verbliebenen Fragmente aus der Warteschlange und ein Hinzufügen einer Nachricht für die zugeordnete Clientstation zum Löschen der zuvor übertragenen Fragmente umfasst.

2. Verfahren nach Anspruch 1, wobei die Warteschlange (120) für jede der Clientstationen (104, 108) ferner eine Teilwarteschlange hoher Priorität aufweist, die mit in noch höherem Maße zeitkritischen Daten verknüpft ist.

3. Verfahren nach Anspruch 1 oder 2, wobei der Schritt zur Bestimmung, dass es sich bei der empfangenen Datennachricht um eine in geringem Maße zeitkritische Nachricht handelt, umfasst:
Bestimmen, dass die Größe der empfangenen Datennachricht größer als eine vorgegebene Größe ist, und/oder Bestimmen, dass die empfangene Datennachricht ein Flag für eine geringe Priorität aufweist.

4. Verfahren nach Anspruch 1, wobei der Schritt zum Übertragen von einem der Fragmente ein Auswählen des zu übertragenden Fragments abhängig davon umfasst, welcher Teil des Datennachrichteninhalts von der zugeordneten Clientstation angefordert wurde.

5. Verfahren nach Anspruch 1, wobei der Schritt zum individuellen Betreuen einer jeden Warteschlange (120) ferner umfasst:
Bündeln (404) der Datennachricht mit anderen zur Übertragung anstehenden Daten zur Bildung eines Nachrichtenbündels, dessen Größe zum Füllen eines Netzwerkanschlusspufferspeichers ausreicht, der der Warteschlangenbetreuungsengine zugeordnet ist, und
Bestimmen, ob der Anschlusspufferspeicher für den Empfang des Nachrichtenbündels zur Verfügung steht.

6. Verfahren nach Anspruch 5, wobei das Nachrichtenbündel in den Anschlusspufferspeicher geschrieben (410) wird, wenn der Anschlusspufferspeicher für den Empfang des Nachrichtenbündels zur Verfügung steht.

7. Verfahren nach Anspruch 5 oder 6, wobei, wenn der Anschlusspufferspeicher nicht für den Empfang des Nachrichtenbündels zur Verfügung steht, dem Nachrichtenbündel ein Thread eines Threadpools zugewiesen (412) wird, und zugelassen (414) wird, dass der Thread das Schreiben des Nachrichtenbündels in den Anschlusspufferspeicher bewerkstelligt.

8. Computerprogrammprodukt, das einen Computerprogrammcodeträger aufweist, der dazu ausgebildet ist, bei Ausführung des Programms auf einem Computer alle Schritte von einem der Ansprüche 1 bis 7 auszuführen.

9. Datenverarbeitungsvorrichtung (116), die aufweist:
eine Netzwerkschnittstelle (506), die zur Verbindung mit einem Netzwerk ausgebildet ist, sowie zum Empfangen von Anfragen mehrerer Clientstationen (104, 108) zum Abonnieren eines Themas und zum Übertragen von Themadaten von der Datenverarbeitungseinrichtung (116) zu den mehreren Clientstationen (104, 108) ausgebildet ist, die das Thema abonniert haben,
eine Speichervorrichtung (508), die zum Speichern separater virtueller Warteschlangen (120) für jede der Clientstationen (104, 108) ausgebildet ist, wobei die virtuelle Warteschlange (120) für jede der Clientstationen (104, 108) eine Teilwarteschlange (120) niedriger Priorität, die mit in geringem Maße zeitkritischen Daten verknüpft ist, und eine Teilwarteschlange normaler Priorität aufweist, die mit in höherem Maße zeitkritischen Daten verknüpft ist,
eine Eingabeschnittstelle (504), die dazu ausgebildet ist, eine das Thema betreffende Datennachricht zu empfangen, zu bestimmen, dass es sich bei der empfangenen Datennachricht um eine in geringem Maße zeitkritische Nachricht handelt, und die Datennachricht in der Speichervorrichtung (508) zu speichern,
wobei die Datennachricht in Fragmente geteilt (304) und jedes Fragment gespeichert wird,
einen Prozessor (502), der dazu ausgebildet ist, zumindest eine Warteschlangenbetreuungsengine (122) zum Betreuen der separaten virtuellen Warteschlangen (120) zu instanziieren, den Teilwarteschlangen niedriger Priorität für die Clientstationen (104, 108), die das Thema abonniert haben, Verweise auf jedes Fragment der Datennachricht hinzuzufügen, wobei die Verweise sich darauf beziehen, wo die zugehörigen Fragmente in der Speichervorrichtung (508) gespeichert sind, und jede virtuelle Warteschlange (120) mit der zumindest einen Warteschlangenbetreuungsengine (122) individuell zu betreuen, wobei jede Warteschlangenbetreuungsengine (122) abhängig von den virtuellen Warteschlangeninhalten bestimmt, wann die Datennachricht an die der virtuellen Warteschlange zugeordnete Clientstation (104, 108) übertragen werden soll, wobei hierbei, wenn in der Teilwarteschlange normaler Priorität keine Datennachrichten warten, eines der Fragmente der Teilwarteschlange niedriger Priorität übertragen (320) wird,
wobei der Prozessor ferner dazu ausgebildet ist, in Reaktion auf eine Bestimmung, dass eines der Fragmente aufgrund von in der Teilwarteschlange normaler Priorität wartenden Datennachrichten nicht übertragen werden kann und zumindest ein vorhergehendes Fragment der Datennachricht zuvor übertragen wurde und die Zeit, die seit der Übertragung des zumindest einen vorhergehenden Fragments vergangen ist, einen vorgegebenen Wert überschreitet und mehr als ein erster Teil der Fragmente der Datennachricht zuvor übertragen wurde, die verbliebenen Fragmente in die Teilwarteschlange normaler Priorität zu verschieben, und
wobei der Prozessor ferner dazu ausgebildet ist, in Reaktion auf eine Bestimmung, dass eines der Fragmente aufgrund von in der Teilwarteschlange normaler Priorität wartenden Datennachrichten nicht übertragen werden kann und zumindest ein vorhergehendes Fragment der Datennachricht zuvor übertragen wurde und die Zeit, die seit der Übertragung des zumindest einen vorhergehenden Fragments vergangen ist, einen vorgegebenen Wert überschreitet und mehr als der erste Teil der Fragmente der Datennachricht zuvor nicht übertragen wurde und weniger als ein zweiter Teil der Fragmente der Datennachricht zuvor übertragen wurde, die verbliebenen Fragmente aus der Warteschlange zu entfernen (336) und eine Nachricht für die zugeordnete Clientstation zum Löschen der zuvor übertragenen Fragmente hinzuzufügen.

## Revendications

1. Procédé de transmission de données sensibles au temps à partir d'un serveur (116) à une pluralité de terminaux clients (104, 108), comprenant le fait :
de construire une file d'attente virtuelle séparée (120) pour chacun des terminaux clients (104, 108) au niveau du serveur (116), où la file d'attente virtuelle (120) pour chacun des terminaux clients (104, 108) comprend une sous-file d'attente de faible priorité associée à des données de faible sensibilité au temps, et une sous-file d'attente de priorité normale associée aux données d'une sensibilité au temps plus élevée ;
d'instancier au moins un moteur de service de file d'attente (122) pour servir les files d'attente virtuelles séparées (120) ;
de recevoir des demandes à partir de la pluralité de terminaux clients (104, 108) pour s'abonner à un sujet ;
de recevoir un message de données se rapportant au sujet ;
de déterminer que le message de données reçu est un message de faible sensibilité au temps ;
de stocker le message de données sur un dispositif de stockage (118) au niveau du serveur (120) en divisant (304) le message de données en fragments et en stockant chaque fragment ;
d'ajouter des références séparées à chaque fragment du message de données aux sous-files d'attente de faible priorité pour ces terminaux clients (104, 108) abonnés au sujet, où les références sont à l'endroit où les fragments associés sont stockés sur le dispositif de stockage (118) ; et
de servir de manière indépendante chaque file d'attente virtuelle (120) avec l'au moins un moteur de service de file d'attente (122), où chaque moteur de service de file d'attente (122) détermine en fonction du contenu de file d'attente virtuelle le moment de la transmission du message de données au terminal client associé à la file d'attente virtuelle (104, 108), transmettant ainsi (320) l'un des fragments à partir de la sous-file d'attente de faible priorité si aucun message de données n'est en attente dans la sous-file d'attente de priorité normale ;
dans lequel, en réponse à la détermination du fait que l'un des fragments ne peut pas être transmis en raison de messages de données en attente dans la sous-file d'attente de priorité normale, et qu'au moins un fragment précédent provenant du message de données a été précédemment transmis, et que le temps écoulé depuis que l'au moins un fragment précédent a été transmis est supérieur à une valeur prédéfinie, et qu'une proportion supérieure à une première proportion des fragments provenant du message de données a été précédemment transmise, l'étape qui consiste à servir de manière indépendante chaque file d'attente virtuelle (120) comprend en outre le fait de déplacer (322) les fragments restants à la sous-file d'attente de priorité normale ; et
dans lequel, en réponse à la détermination du fait que l'un des fragments ne peut pas être transmis en raison de messages de données en attente dans la sous-file d'attente de priorité normale, et qu'au moins un fragment précédent provenant du message de données a été précédemment transmis, et que le temps écoulé depuis que l'au moins un fragment précédent a été transmis est supérieur à une valeur prédéfinie, et qu'une proportion supérieure à la première proportion des fragments provenant du message de données n'a pas été précédemment transmise, et qu'une proportion inférieure à une deuxième proportion des fragments provenant du message de données a été précédemment transmise, l'étape qui consiste à servir de manière indépendante chaque file d'attente virtuelle (120) comprend en outre le fait de retirer (336) les fragments restants de la file d'attente et d'ajouter un message au terminal client associé pour supprimer les fragments précédemment transmis.

2. Procédé selon la revendication 1, dans lequel la file d'attente (120) pour chacun des terminaux clients (104, 108) comprend en outre une sous-file d'attente de priorité élevée associée à des données d'une sensibilité au temps encore plus élevée.

3. Procédé selon la revendication 1 ou 2, dans lequel l'étape qui consiste à déterminer que le message de données reçu est un message de faible sensibilité au temps comprend au moins une détermination parmi :
la détermination du fait que le message de données reçu est supérieur à une taille prédéterminée ; et
la détermination du fait que le message de données reçu comprend un indicateur de faible priorité.

4. Procédé selon la revendication 1, dans lequel l'étape qui consiste à transmettre l'un des fragments comprend le fait de sélectionner lequel des fragments doit être transmis en fonction d'une partie du contenu de message de données demandé par le terminal client associé.

5. Procédé selon la revendication 1, dans lequel l'étape qui consiste à servir de manière indépendante chaque file d'attente (120) comprend en outre le fait :
de traiter par lots (404) le message de données avec d'autres données en attente à transmettre pour former un message traité par lots de taille suffisante pour remplir une mémoire tampon de connecteur de réseau associée au moteur de service de file d'attente ; et
de déterminer si la mémoire tampon de connecteur est disponible pour recevoir le message traité par lots.

6. Procédé selon la revendication 5, comprenant le fait, si la mémoire tampon de connecteur est disponible pour recevoir le message traité par lots, d'écrire (410) le message traité par lots dans la mémoire tampon de connecteur.

7. Procédé selon la revendication 5 ou 6, comprenant le fait, si la mémoire tampon de connecteur n'est pas disponible pour recevoir le message traité par lots, d'attribuer (412) un fil à partir d'une réserve de fils au message traité par lots et de permettre (414) au fil de gérer l'écriture du message traité par lots dans la mémoire tampon de connecteur.

8. Produit de programme informatique comprenant un moyen de code de programme informatique adapté pour effectuer toutes les étapes de l'une des revendications 1 à 7 lorsque ledit programme est exécuté sur un ordinateur.

9. Dispositif informatique (116), comprenant :
une interface réseau (506) agencée pour se connecter à un réseau et configurée pour recevoir des demandes à partir d'une pluralité de terminaux clients (104, 108) pour s'abonner à un sujet, et pour transmettre des données de sujet à partir du dispositif informatique (116) à la pluralité de terminaux clients (104, 108) abonnés au sujet ;
un dispositif de stockage (508) agencé pour stocker une file d'attente virtuelle séparée (120) pour chacun des terminaux clients (104, 108), où la file d'attente virtuelle (120) pour chacun des terminaux clients (104, 108) comprend une sous-file d'attente de faible priorité associée à des données de faible sensibilité au temps, et une sous-file d'attente de priorité normale associée à des données d'une sensibilité au temps plus élevée ;
une interface d'entrée (504) agencée pour recevoir un message de données se rapportant au sujet, pour déterminer que le message de données reçu est un message de faible sensibilité au temps, et pour stocker le message de données sur le dispositif de stockage (508) en divisant (304) le message de données en fragments et en stockant chaque fragment ;
un processeur (502) configuré pour instancier au moins un moteur de service de file d'attente (122) pour servir les files d'attente virtuelles séparées, pour ajouter des références à chaque fragment du message de données pour les sous-files d'attente de faible priorité pour ces terminaux clients (104, 108) abonnés au sujet, où les références sont à l'endroit où les fragments associés sont stockés sur le dispositif de stockage (508), et pour servir de manière indépendante chaque file d'attente virtuelle (120) avec l'au moins un moteur de service de file d'attente (122), où chaque moteur de service de file d'attente (122) détermine en fonction du contenu de file d'attente virtuelle le moment de la transmission du message de données à son terminal client associé (104, 108), transmettant ainsi (320) l'un des fragments à partir de la sous-file d'attente de faible priorité si aucun message de données n'est en attente dans la sous-file de priorité normale ;
dans lequel, en réponse à la détermination du fait que l'un des fragments ne peut pas être transmis en raison de messages de données en attente dans la sous-file d'attente de priorité normale, et qu'au moins un fragment précédent provenant du message de données a été précédemment transmis, et que le temps écoulé depuis que l'au moins un fragment précédent a été transmis est supérieur à une valeur prédéfinie, et qu'une proportion supérieure à une première proportion des fragments provenant du message de données a été précédemment transmise, le processeur est en outre configuré pour déplacer (322) les fragments restants à la sous-file d'attente de priorité normale ; et
dans lequel, en réponse à la détermination du fait que l'un des fragments ne peut pas être transmis en raison de messages de données en attente dans la sous-file d'attente de priorité normale, et qu'au moins un fragment précédent provenant du message de données a été précédemment transmis, et que le temps écoulé depuis que l'au moins un fragment précédent a été transmis est supérieur à une valeur prédéfinie, et qu'une proportion supérieure à la première proportion des fragments provenant du message de données n'a pas déjà été transmise, et qu'une proportion inférieure à une deuxième proportion des fragments provenant du message de données a déjà été transmise, le processeur est en outre configuré pour retirer (336) les fragments restants de la file d'attente et pour ajouter un message au terminal client associé pour supprimer les fragments précédemment transmis.
